# EUROPEAN PATENT SPECIFICATION

(11) **EP 2 386 442 B1**
(45) Date of publication and mention of the grant of the patent: **07.08.2019**
(21) Application number: 11165579.1
(22) Date of filing: 10.05.2011
(51) Int. Cl.: B60P 1/02, B60P 3/04

(54) **Platforms support systems for use in transporters**
Plattformstützsysteme zur Verwendung in Transportern
Systèmes de support de plate-formes à utiliser dans des transporteurs

(30) Priority: 10.05.2010 GB 201007754
(43) Date of publication of application: 16.11.2011
(73) Proprietor: Parkhouse Country Estates Limited, Milnthorpe Cumbria LA7 7RF (GB)
(72) Inventor: Houghton, Michael John, Milnthorpe, Cumbria LA7 7RF (GB)
(74) Representative: Appleyard Lees IP LLP

(56) References cited:
- GB-A- 2 154 184
- GB-A- 2 395 695
- US-A- 6 058 885

## Description

### Field to the Invention

The present invention relates to platform support systems for use in transporters and especially, but not limited to, platform support systems for use in livestock transporters and transporters for use in transporting livestock.

### Background to the Invention

Trailers and other transporters for use in transporting livestock generally comprise a number of levels each level having a platform to support the livestock. Such transporters enable livestock to be transported economically and efficiently. Transporters for transporting livestock may comprise an integrated cab plus transport area or comprise a trailer forming a livestock area to be towed behind a tractor unit.

The transport area may have at least one platform which is vertically moveable in order for the height of the level to be adjusted according to the type of goods being transported. In livestock transporters, the height of the level will be dependent upon the type of livestock being transported. For example, a level supporting cattle will require a greater height than a level supporting poultry or sheep or pigs. Accordingly, it is advantageous for a transporter to have a platform which can move vertically in order for the transporter to transport different goods efficiently and economically.

However, producing a safe and efficient way of positioning and securing the platforms in the transporter is not straightforward, in particular in livestock transporters where cleaning requirements are important, where there are potentially multiple platforms above one another and when the vertical separation between platforms is potentially small.

US 6,058,885 describes a lock and release mechanism for vertically elevatable decks in a livestock trailer including a plurality of vertical rows of vertically spaced, pivotally mounted, locking pins located at a plurality of longitudinally spaced locations along each side of the livestock trailer.

GB 2 154 184 describes a vehicle, the body of which includes a floor, shallow sidewalls columns and roof and encloses a first or lower deck structure which can be raised and lowered by hauling on and relaxing of cables and an upper deck structure.

GB 2 395 695 describes a trailer or container having a plurality of pillars suitable for supporting loading decks that can be raised or lowered on the pillars, the arrangement being such that a loading deck at a particular height on the pillars can be moved substantially direct to and secured at a lower height above a floor of the trailer.

It is an aim of the present invention to address at least one problem associated with the prior art, whether referred to herein or otherwise.

### Summary of the Invention

According to a first aspect of the present invention there is provided a platform support system comprising a support pawl and an actuation system operable in response to an input received from a user to move the support pawl between a supporting position and a non-supporting position when the support pawl is not in use supporting a platform, wherein a platform is arrangeable with the support pawl so as to be supported by the support pawl when in the supporting position, and wherein operation of the actuation system in response to a user input leaves the support pawl in a supporting position when the support pawl is in use supporting a platform characterised in that the actuation system is mounted in a housing, and the support pawl is arranged to protrude from the housing through an aperture defined therein when arranged in the supporting position.

Suitably, the actuation system is coupled to the support pawl using a linkage including an elastically flexible element. Suitably, operation of the actuation system in response to a user input extends the elastically flexible element to leave the support pawl in a supporting position when the support pawl is in use supporting a platform.

Suitably, the support pawl is mounted to enable the platform to move freely there-past when in the non-supporting position. Suitably, the support pawl is mounted to enable the platform to move freely there-past in a first direction when in the supporting position. Suitably, the support pawl is mounted to prevent the platform from moving there-past in a second direction when in the supporting position. Suitably, the second direction is parallel to, but of opposite sense to the first direction.

Suitably, the support pawl is manually moveable between supporting and non-supporting positions in the event of actuation system failure. Suitably, the platform support system further comprises a locking pin for the support pawl arrangeable to lock the support pawl in the non-supporting position irrespective of the operation or actuation system.

Suitably, the actuation system comprises a linear actuator, for example an electromagnetic, pneumatic or hydraulic actuator. Suitably, the actuation system is coupled to the support pawl to produce rotation of the support pawl between the supporting position and the non-supporting position. Suitably, the actuation system is coupled to the support pawl to produce rotation of the support pawl between the non-supporting position and the supporting position.

Suitably, the actuation system is coupled to a blanking means, arranged to cover the aperture defined in the housing when the support pawl is arranged in the supporting position. Suitably, the blanking means comprises a seal to seal the housing against ingress of fluids when the aperture is covered by the blanking means. Suitably, the blanking means comprises a seal to seal the housing against ingress of water when the aperture is covered by the blanking means. Suitably, the blanking means is an extension from the support pawl. Suitably the blanking means is arranged to move as one with the support pawl. Suitably, the blanking means is formed integrally with the support pawl. Suitably, the blanking means is a load bearing component arranged to prevent rotation of the support pawl beyond the supporting position when the support pawl is moved from the non-supporting position to the supporting position.

Suitably, the platform support system comprises a plurality of support pawls as described above. Suitably, the actuation system is operable to move a plurality of support pawls in response to a single input received from a user.

Suitably, the platform support system comprises a first support pawl or first plurality of support pawls as described above coupled to a first actuation system, and a second support pawl or second plurality of support pawls as described above coupled to a second actuation system. Suitably, the first and second actuation systems are linked so as to operate together in response to a single input received from a user. In other embodiments support pawls may be linked to a plurality of actuation systems and operable independently in response to independent inputs received from a user.

Suitably, the platform support system further comprises one or more platforms. Suitably, the platform support system further comprises a platform moving system operable in response to a user input to move one or more platforms in a first and/or a second direction.

Suitably, the platform support system further comprises one or more support pawl position sensors arranged to indicate the position of the support pawls. Suitably, the support pawl position sensors are arranged to indicate that the support pawls are arranged in the supporting position. Suitably, the support pawl position sensors are arranged to indicate that the support pawls are in the non-supporting position. Suitably, the support pawl position sensors are arranged to indicate that the support pawls are not in the supporting position. Suitably, the support pawl position sensors are arranged to indicate that the support pawls are not in the non-supporting position. Suitably, the support pawl position sensors are operatively coupled to the platform support system. Suitably, the platform support system is wholly or partially deactivated when the support pawl position sensors indicate that the support pawls are not in the supporting position. Suitably, the platform support system is arranged to prevent movement of a platform in a downward direction when the support pawl position sensors indicate that the support pawls are not in the supporting position.

### Brief Description of the Drawings

The present invention will now be described, by way of example only, and with reference to the following drawings, in which:
Figure 1 is a side view of a platform support system according to a first example embodiment of the present invention arranged with support pawls in a non-supporting position;
Figure 2 is a side view of a platform support system of Figure 1 arranged with support pawls in a supporting position;
Figure 3 is a side view of a platform support system of Figure 1 with a support pawl arranged in a support position and supporting a platform;

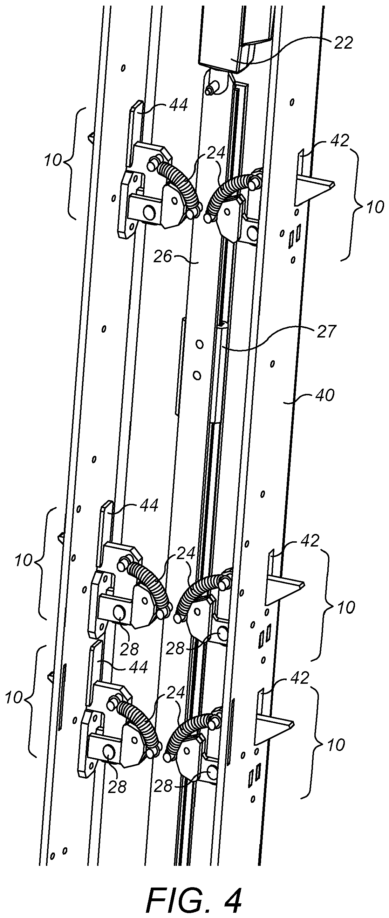

Figure 4 is perspective view of the platform support system of Figure 1 from the side, front and above; and
Figure 5 is a perspective view of a transporter including a platform support system according to an example embodiment of the present invention, from the side, front and above and with a side structure thereof removed to enable a platform support system thereof of the transporter to be seen.

### Description of the Preferred Embodiments

Typically a transporter for use in transporting livestock comprises a plurality of levels. Each level has a platform for supporting the livestock thereon, with the height of each level selected dependent upon the type of livestock being transported. Accordingly, it is advantageous for each platform to movable between various support positions in which the vertical position of each platform is adapted to different types of livestock. However, the provision of multiple levels and platforms makes it difficult to efficiently enable movement and support of the platforms.

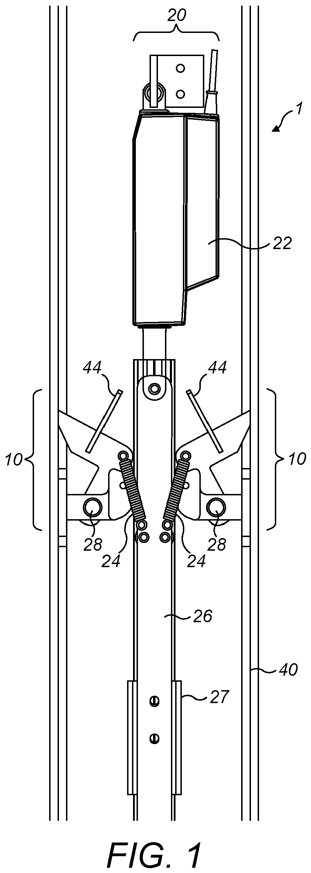

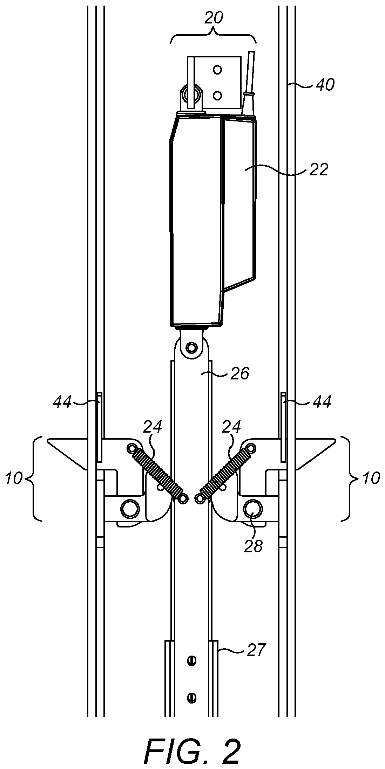

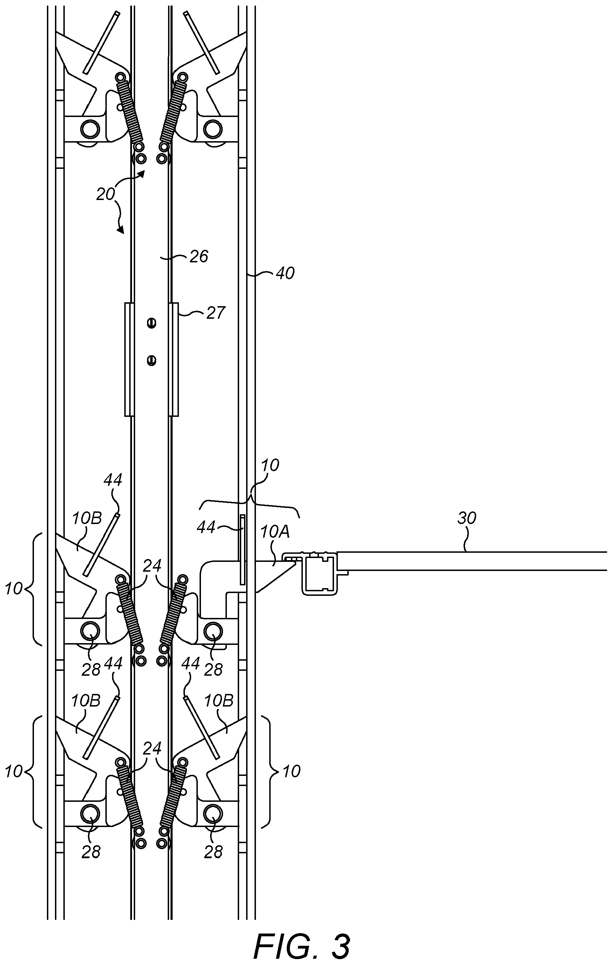

As shown in Figures 1 through 3, a platform support system 1 comprises support pawls 10 and an actuation system 20. The actuation system 20 includes an actuator 22, and is operable in response to an input received from a user, for example an input corresponding to operation of a switch on a user control panel (not shown). The actuation system 20 further comprises a linkage between the actuator 22 and to the support pawls 10 such that operation of the actuator 22 can move the support pawls 10 between a supporting position as shown in Figure 2 and a non-supporting position as shown in Figure 1. In both of these Figures the support pawls 10 are not in use supporting a platform. Figure 3 shows a platform 30 arranged with a support pawl 10A so as to be supported by the support pawl 10A in the supporting position. Operation of the actuation system 30 in response to a user input when a platform 30 is supported by the support pawl 10A leaves the support pawl 10A in a supporting position. In this way safe support of the platform 30 is achieved. Furthermore, when the support pawls 10 are used in combination with one another to support one of a range of number of platforms 30 or one or more platforms 30 in one of a range of support positions, example embodiments of the present invention enable convenient and safe positioning and support of the platforms, as will be appreciated from the further description given below.

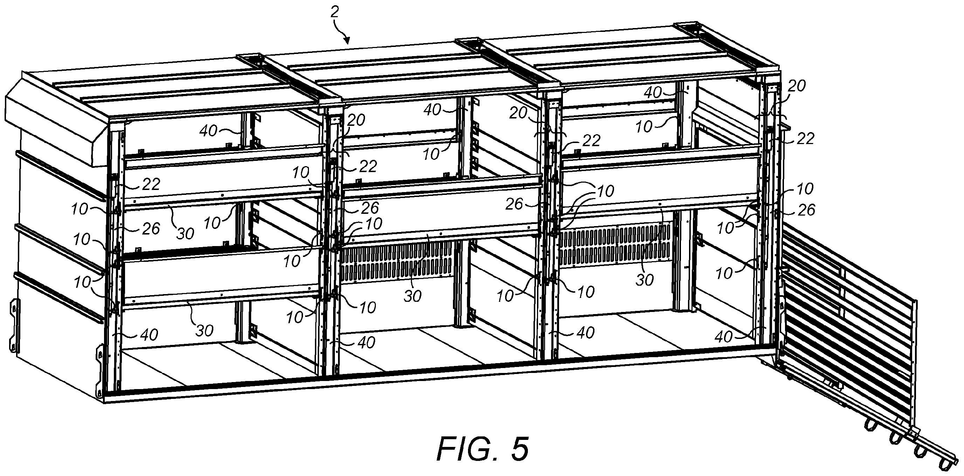

Figure 5 shows a transporter 2 according to an example embodiment of the present invention with a side structure thereof removed to enable a platform support system and platforms thereof to be seen. The transporter 2 includes a plurality of platforms 30, and actuation system 20 and a plurality of support pawls 10. The platforms 30 are moveable in a first, vertically upward direction, and a second, vertically downward direction, with movement thereof being effected by a platform moving system (not shown). The platform moving system conveniently may comprise a hydraulic ram linked to a platform using cables. The platform moving system is arranged to move the platforms, and to drop them off onto the support pawls 10 for support in a desired configuration. The support pawls 10 are mounted in groups at each support level, each group associated with a support position and arranged to engage and optionally support platforms close to corner regions thereof. There the support pawls 10 are mounted in groups of four support pawls 10, with four groups of support pawls provided in each vertical movement range of the platforms 30 to give the option of supporting a platform at one of four levels.

The support pawls 10 are mounted to enable associated platforms 30 to move past the support pawls 10 in the first direction by displacing the support pawls 10 from the supporting position, whereas the support pawls 10 are mounted to inhibit movement of the associated platforms 30 past the support pawls 10 in the second direction when the support pawls 10 are arranged in a supporting position. When the support pawls 10 are arranged in a non-supporting position the platforms 30 are moveable freely past the support pawls 10 in both first and second directions.

To enable the platforms 30 to move past the support pawls 10 by displacing them from the supporting position 10, the actuation system 30 is coupled to the support pawl using a linkage including an elastically flexible element 24. The elastically flexible element shown in Figures 1 through 3 is in the form of a coil spring. When a support pawl 10 is in use supporting a platform 30, operation of the actuation system 20 in response to a user input requesting the pawls 10 are moved by the actuation system 20 to the non-supporting position causes pawls that are in use supporting a platform 30, such as pawl 10A in Figure 3, to remain in position. For such pawls movement of the actuation system is taken up by elastic deformation of the associated flexible element 24. As shown in Figure 3, although the pawl 10A remains in the supporting position despite operation of the actuation system 20, pawls that are not involved in supporting a platform 30 are moveable by the actuation system 20 freely between the supporting and non-supporting positions. For example, in Figure 3 the pawl 10A remains in the supporting position while the pawls 10B have been moved by the actuation system 20 to the non-supporting position.

The actuation system 20 comprises a plurality of actuators 22, which may suitably comprise electromagnetic linear actuators. Linear motion produced by each actuator 22 drives a linear coupling bar 26 that that is mounted in linear bearings 27. The elastically flexible elements 24 transfer the linear motion of the coupling bar 26 to the support pawls 10 by pulling the support pawls 10 in a rotary fashion about mounting pivots 28. The mounting pivots 28 are arranged to carry the load from the platforms 30 from the support pawls 10 to a support structure on which the platform support system is mounted.

The actuation system 20 is mounted in a housing 40 with the support pawls 10 arranged to protrude from the housing 40 through apertures 42 defined therein when arranged in the supporting position. With the support pawls 10 arranged in the supporting position blanking means 44 seal the housing 40 against ingress of water and other fluids. This is important in cases there environment in which the support system is used is subjected to washing, or other occasional planned application of fluids. The embodiment shown in the Figures includes blanking means 44 that form a load bearing stop arranged to prevent rotation of the support pawls beyond the supporting position when the support pawl is moved from the non-supporting position to the supporting position, and to prevent rotation beyond the supporting position in response to load applied to the support pawls 10 by a platform 30.

In the embodiment shown in the Figures, the platform support system comprises a plurality of support pawls as described above, with the actuation system operable to move linkages coupled to all of the plurality of support pawls in response to a single input received from a user. In this way operation of the platform support system is simplified for the user, but without compromising the effectiveness or safety of the support provided to the platforms. However, in other embodiments only one support pawl may be provided, with the platform arranged to rotate past the support pawl rather than perform a purely translational movement. Equally, in other embodiments a first plurality of support pawls as described above may be coupled to a first actuation system, and a second support pawl or second plurality of support pawls as described above coupled to a second independent actuation system. As an additional measure, some or all of the support pawls may be manually moveable between supporting and non-supporting positions, to enable platforms to be moved in the event of actuation system failure. Each support pawl of this nature may further comprise a locking pin arrangeable to lock the support pawl in the non-supporting position irrespective of the operation or actuation system. As a further precaution, one or more of the support pawls, for example all of the support pawls may be fitted with a pawl position sensor able to indicate the position of the support pawl. The support pawl positions indicated by the pawl position sensor(s) may be made visible to a user for consideration in the user's operation of the actuation system and/or the platform moving system. In other embodiments the support pawl position sensors may be coupled to an override controller that selectively allows or inhibits operation of the platform moving system according to the position of the support pawls as indicated by the pawl position sensors. In such an embodiment, the platform support system may be inhibited from moving one or more platforms in a first, or second direction, for example the direction of bringing the platforms into engagement with the support pawls if the support pawl position sensors do not indicate that the support pawls are arranged in the supporting position. The platforms in such embodiments may only be moved down onto the support pawls when the pawls position sensors indicate that the support pawls are correctly located in the supporting position.

As described above, the platform support system enables effective support to be provided in a safe and readily controllable manner.

## Claims

1. A platform support system (1) comprising a support pawl (10) and an actuation system (20) operable in response to an input received from a user to move the support pawl (10) between a supporting position and a non-supporting position when the support pawl (10) is not in use supporting a platform (30), wherein a platform (30) is arrangeable with the support pawl (10) so as to be supported by the support pawl (10) when in the supporting position, and wherein operation of the actuation system (20) in response to a user input leaves the support pawl (10) in a supporting position when the support pawl (10) is in use supporting a platform **characterised in that** the actuation system (20) is mounted in a housing (40), and the support pawl (10) is arranged to protrude from the housing (40) through an aperture (42) defined therein when arranged in the supporting position.

2. A platform support system according to claim 1, wherein the actuation system (20) is coupled to the support pawl (10) using a linkage including an elastically flexible element (24).

3. A platform support system according to claim 2, wherein operation of the actuation system (20) in response to a user input extends the elastically flexible element (24) to leave the support pawl in a supporting position when the support pawl is in use supporting a platform (30).

4. A platform support system according to any preceding claim, wherein the support pawl (10) is mounted to enable the platform (30) to move freely there-past when in the non-supporting position, and is mounted to enable the platform to move freely there-past in a first direction when in the supporting position.

5. A platform support system according to claim 4, wherein the support pawl (10) is mounted to prevent the platform (30) from moving there-past in a second direction when in the supporting position.

6. A platform support system according to any preceding claim, wherein the support pawl (10) is manually moveable between supporting and non-supporting positions in the event of actuation system failure and further comprising a locking pin for the support pawl (10), arrangeable to lock the support pawl (10) in the non-supporting position irrespective of the operation or actuation system (20).

7. A platform support system according to any preceding claim, wherein the actuation system (20) is coupled to the support pawl (10) to produce rotation of the support pawl (10) between the supporting position and the non-supporting position and between the non-supporting position and the supporting position.

8. A platform support system according to claim 1, wherein the actuation system (20) is coupled to a blanking means (44), arranged to cover, and optionally seal, the aperture (42) defined in the housing (40) when the support pawl (10) is arranged in the supporting position.

9. A platform support system according to claim 8, wherein the blanking means (44) is a load bearing component arranged to prevent rotation of the support pawl (10) beyond the supporting position when the support pawl (10) is moved from the non-supporting position to the supporting position.

10. A platform support system according to any preceding claim, comprising a plurality of support pawls (10) as described above in claims 1 to 9, and wherein the actuation system (20) is operable to move a plurality of support pawls (10) in response to a single input received from a user.

11. A platform support system according to any preceding claim, comprising a platform moving system operable in response to a user input to move one or more platforms (30) in a first and/or a second direction.

12. A platform support system according to any preceding claim, comprising one or more support pawl position sensors arranged to indicate the position of the support pawls (10), in particular to indicate: (a) that the support pawls (10) are arranged in the supporting position; and/or (b) that the support pawls (10) are in the non-supporting position; and/or (c) that the support pawls (10) are not in the supporting position; and/or (d) that the support pawls (10) are not in the non-supporting position.

13. A platform support system according to claim 12 wherein the support pawl position sensors are operatively coupled to the platform support system and wherein the platform support system is wholly or partially deactivated when the support pawl position sensors indicate that the support pawls (10) are not in the supporting position.

14. A platform support system according to claim 13, arranged to prevent movement of a platform (30) in a downward direction when the support pawl position sensors indicate that the support pawls (10) are not in the supporting position.

## Patentansprüche

1. Ein Plattformstützsystem (1), das eine Stützklinke (10) und ein Antriebssystem (20) umfasst, das als Antwort auf eine von einem Nutzer erhaltene Dateneingabe betriebsbereit ist, um die Stützklinke (10) zwischen einer stützenden Position und einer nicht stützenden Position zu bewegen, wenn die Stützklinke (10) nicht zur Stützung einer Plattform (30) verwendet wird, wobei eine Plattform (30) mit der Stützklinke (10) arrangiert werden kann, um von der Stützklinke (10) in der stützenden Position gestützt zu werden, und wobei die Betätigung des Antriebssystems (20) als Antwort auf eine Nutzerdateneingabe die Stützklinke (10) in einer stützenden Position hinterlässt, wenn die Stützklinke (10) verwendet wird, um eine Plattform zu stützen; charakterisiert dadurch, dass das Antriebssystem (20) in einem Gehäuse (40) montiert und die Stützklinke (10) so arrangiert wird, dass sie in der stützenden Position durch eine Öffnung (40) aus dem Gehäuse (42) herausragt.

2. Ein Plattformstützsystem gemäß Anspruch 1, wobei das Antriebssystem (20) mit einer Stützklinke (10) mit Hilfe einer Verbindung, inklusive eines elastischen flexiblen Elements (24), verbunden ist.

3. Ein Plattformstützsystem gemäß Anspruch 2, wobei die Betätigung des Antriebssystems (20) als Antwort auf eine Nutzereingabe das elastische flexible Element (24) verlängert, sodass die Stützklinke in einer stützenden Position bleibt, wenn die Stützklinke zur Stützung einer Plattform (30) verwendet wird.

4. Ein Plattformstützsystem gemäß einem der vorherigen Ansprüche, wobei die Stützklinke (10) montiert wird, damit die Plattform (30) sich in der nicht stützenden Position frei bewegen kann und sich in der stützenden Position in eine erste Richtung frei bewegen kann.

5. Ein Plattformstützsystem gemäß Anspruch 4, wobei die Stützklinke (10) so montiert wird, dass sie verhindert, dass sich die Plattform (30) in der stützenden Position in eine zweite Richtung bewegt.

6. Ein Plattformstützsystem gemäß einem der vorherigen Ansprüche, wobei die Stützklinke (10) im Fall einer Störung des Antriebssystems manuell zwischen den stützenden und nicht stützenden Positionen bewegt werden kann und des Weiteren für die Stützklinke (10) einen Sperrbolzen umfasst, der die Stützklinke (10) in der nicht stützenden Position blockieren kann, ungeachtet des Betriebs- oder Antriebssystems (20).

7. Ein Plattformstützsystem gemäß einem der vorherigen Ansprüche, wobei das Antriebssystem (20) mit der Stützklinke (10) verbunden ist, damit diese zwischen der stützenden und nicht stützenden Position und umgekehrt rotieren kann.

8. Ein Plattformstützsystem gemäß Anspruch 1, wobei das Antriebssystem (20) mit einem Verschlussdeckel (44) verbunden ist, der die Öffnung (42) in dem Gehäuse (40) abdeckt und optional verschließt, wenn sich die Stützklinke (10) in der stützenden Position befindet.

9. Ein Plattformstützsystem gemäß Anspruch 8, wobei der Verschlussdeckel (44) ein tragendes Element ist, das die Rotation der Stützklinke (10) über die stützende Position hinaus verhindert, wenn die Stützklinke (10) von der nicht stützenden Position in die stützende Position bewegt wird.

10. Ein Plattformstützsystem gemäß einem der vorherigen Ansprüche, das mehrere Stützklinken (10), wie oben in den Ansprüchen 1 bis 9 beschrieben, umfasst und wobei das Antriebssystem (20) mehrere Stützklinken (10) als Antwort auf eine einzige Dateneingabe eines Nutzers bewegt.

11. Ein Plattformstützsystem gemäß einem der vorherigen Ansprüche, das ein Plattformbewegungssystem umfasst, das als Antwort auf eine Nutzereingabe eine oder mehrere Plattformen (30) in eine erste und/oder zweite Richtung bewegt.

12. Ein Plattformstützsystem gemäß einem der vorherigen Ansprüche, das eine oder mehrere Stützklinken-Positionssensoren umfasst, die die Position der Stützklinken (10) anzeigen, insbesondere um Folgendes anzuzeigen: (a) dass sich die Stützklinken (10) in der stützenden Position befinden;
und/oder (b) dass sich die Stützklinken (10) in der nicht stützenden Position befinden; und/oder (c) dass sich die Stützklinken (10) nicht in der stützenden Position befinden; und/oder (d) dass sich die Stützklinken (10) nicht in der nicht stützenden Position befinden.

13. Ein Plattformstützsystem gemäß Anspruch 12, wobei die Stützklinken-Positionssensoren operativ mit dem Plattformstützsystem gekoppelt sind und wobei das Plattformstützsystem komplett oder teilweite deaktiviert ist, wenn die Stützklinken-Positionssensoren anzeigen, dass sich die Stützklinken (10) nicht in der stützenden Position befinden.

14. Ein Plattformstützsystem gemäß Anspruch 13, das die Bewegung einer Plattform (30) nach unten verhindert, wenn die Stützklinken-Positionssensoren anzeigen, dass sich die Stützklinken (10) nicht in der stützenden Position befinden.

## Revendications

1. Un système de support de plateforme (1) incluant un loquet de blocage (10) et un système de déclenchement (20) qui obéit à la commande d'un utilisateur pour déplacer le loquet de blocage (10) entre une position de blocage et une position de non-blocage lorsque le loquet de blocage (10) n'est pas utilisé pour supporter une plateforme (30). Une plateforme (30) peut donc être disposée de façon à être supportée par le loquet de blocage (10) lorsque celui-ci est en position de blocage, lorsque le système de déclenchement (20) commandé par l'utilisateur a placé le loquet de blocage (10) dans une position appropriée pour supporter une plateforme, ce qui est **caractérisé par le fait que** le système de déclenchement (20) est monté dans un compartiment (40) et que le loquet de blocage (10) est disposé de manière à dépasser de ce compartiment (40) à travers une ouverture (42) définie dans le présent document lorsque ce loquet est en position de blocage.

2. Un système de support de plateforme conforme à la revendication 1, où le système de déclenchement (20) est connecté au loquet de blocage (10) par une liaison qui inclut un élément flexible/ élastique (24).

3. Un système de support de plateforme, conformément à la revendication 2, où le fonctionnement du système de déclenchement (20) en réponse à la commande d'un utilisateur tend l'élément flexible/ élastique (24) de manière à ce qu'il place le loquet de blocage dans une position de support lorsque le loquet sert à soutenir une plateforme (30).

4. Un système de support de plateforme, conformément à toute revendication précédente, où le loquet de blocage (10) est monté de manière à laisser la plateforme (30) se déplacer librement lorsque la position de non-blocage est actionnée, et à la laisser se déplacer librement dans une première direction lorsque la position de blocage est actionnée.

5. Un système de support de plateforme, conformément à la revendication 4, où le loquet de blocage (10) est monté pour empêcher la plateforme (30) de se déplacer dans une deuxième direction lorsque la position de blocage est actionnée.

6. Un système de support de plateforme, conformément à toute revendication précédente, où le loquet de blocage (10) peut être déplacé manuellement entre les deux positions de blocage et de non-blocage en cas de défaillance du système de déclenchement. Il inclut aussi une broche de verrouillage montée sur le loquet de blocage (10) et conçue pour retenir le loquet de blocage (10) en position de non-blocage indépendamment du système de déclenchement (20) ou du fonctionnement.

7. Un système de support de plateforme, conformément à toute revendication précédente, où le système de déclenchement (20) est connecté au loquet de blocage (10) pour faire pivoter le loquet de blocage (10) entre la position de blocage et la position de non-blocage, et inversement

8. Un système de support de plateforme, conformément à la revendication 1, où le système de déclenchement (20) est connecté à un élément de fermeture (44), conçu pour masquer, et optionnellement pour fermer hermétiquement l'ouverture (42) située dans le compartiment (40) lorsque le loquet de blocage (10) est en position de blocage.

9. Un système de support de plateforme, conformément à la revendication 8, où l'élément de fermeture (44) est porteur d'une charge, de manière à empêcher la rotation du loquet de blocage (10) au-delà de la position de blocage lorsque le loquet de blocage (10) passe de la position de non-blocage à la position de blocage.

10. Un système de support de plateforme, conformément à toute revendication précédente, où plusieurs loquets de blocage (10), tels que décrits dans les revendications 1 à 9, où le système de déclenchement (20) est configuré pour contrôler le mouvement de plusieurs loquets de blocage (10) en réponse à une seule commande d'un utilisateur.

11. Un système de support de plateforme, conformément à toute revendication précédente, où un système de déplacement de plateforme obéissant à une commande d'un utilisateur permet de déplacer une ou plusieurs plateformes (30) dans une première et/ou une deuxième direction.

12. Un système de support de plateforme, conformément à toute revendication précédente, où un ou plusieurs capteurs de positions de loquets de blocage configurés pour identifier la position des loquets de blocage (10) et en particulier pour indiquer : (a) que les loquets de blocage (10) sont en position de blocage ; et/ou (b) que les loquets de blocage (10) sont en position de non-blocage ; et/ou (c) que les loquets de blocage (10) ne sont pas en position de blocage ; et/ou (d) que les loquets de blocage (10) ne sont pas en position de non-blocage.

13. Un système de support de plateforme, conformément à la revendication 12, où les capteurs de positions de loquets de blocage sont connectés au système de support de la plateforme, et où le système de support de la plateforme est partiellement ou totalement désactivé lorsque les capteurs de positions de loquets de blocage indiquent que les loquets (10) ne sont pas en position de blocage.

14. Un système de support de plateforme, conformément à la revendication 13, configuré pour empêcher le mouvement de la plateforme (30) vers le bas lorsque les capteurs de positions de loquets de blocage indiquent que les loquets (10) ne sont pas en position de blocage.
